(19) Europäisches Patentamt
European Patent Office
Office européen des brevets

(11)  **EP 2 810 099 B1**

(12)  **EUROPEAN PATENT SPECIFICATION**

(45) Date of publication and mention
of the grant of the patent:
**24.05.2023  Bulletin 2023/21**

(21) Application number: **13705660.2**

(22) Date of filing: **01.02.2013**

(51) International Patent Classification (IPC):
***G01V 1/38*** *(2006.01)*      ***G01V 1/36*** *(2006.01)*

(52) Cooperative Patent Classification (CPC):
**G01V 1/38; G01V 1/364**

(86) International application number:
**PCT/US2013/024471**

(87) International publication number:
**WO 2013/116748 (08.08.2013 Gazette 2013/32)**

(54)  **METHOD AND APPARATUS FOR PROCESSING SEISMIC DATA**

VERFAHREN UND VORRICHTUNG ZUR VERARBEITUNG SEISMISCHER DATEN

PROCÉDÉ ET APPAREIL DE TRAITEMENT DE DONNÉES SISMIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **03.02.2012   US 201261594535 P**

(43) Date of publication of application:
**10.12.2014  Bulletin 2014/50**

(73) Proprietor: **TGS-NOPEC Geophysical Company
Houston, TX 77041 (US)**

(72) Inventors:
• **DOUMA, Huub
Leblon - Rio de Janeiro - RJ
CEP 22441 090 (BR)**
• **BLOOR, Robert Ian
Missouri City, Texas 77459 (US)**

(74) Representative: **Wallin, Nicholas James
Withers & Rogers LLP
2 London Bridge
London SE1 9RA (GB)**

(56) References cited:
EP-A1- 2 375 268      US-A1- 2006 050 611
US-A1- 2008 275 649      US-A1- 2010 114 494

## Description

### CROSS-REFERENCE TO RELATED APPLICATIONS

This application claims priority to and the benefit of United States Provisional Application Serial No. 61/594,535 filed February 3, 2012.

### TECHNICAL FIELD

This disclosure relates generally to geophysical exploration systems, and more particularly to methods of processing seismic data obtained in geophysical surveys.

### BACKGROUND

Petrochemical products such as oil and gas are ubiquitous in society and can be found in everything from gasoline to children's toys. Because of this, the demand for oil and gas remains high. In order to meet this high demand, it is important to locate oil and gas reserves in the Earth. Scientists and engineers conduct "surveys" utilizing, among other things, seismic and other wave exploration techniques to find oil and gas reservoirs within the Earth. These seismic exploration techniques often include controlling the emission of seismic energy into the Earth with a seismic source of energy (e.g., dynamite, air guns, vibrators, etc.), and monitoring the Earth's response to the seismic source with one or more receivers in order to create an image of the subsurface of the Earth. Each receiver may include, for example, a pressure sensor and a particle motion sensor in proximity to one another. The pressure sensor may be, for example, a hydrophone that records scalar pressure measurements of a seismic wavefield. The particle motion sensor may be, for example, a three-component geophone that records vectorial velocity measurements of the seismic wavefield. By observing the reflected seismic wavefield detected by the receiver(s) during the survey, the geophysical data pertaining to reflected signals may be acquired and these signals may be used to form an image indicating the composition of the Earth near the survey location.

In marine-based acquisitions, the receiver(s) may measure the seismic wavefield after it is reflected from the sub-surface of the earth. The reflection from the sub-surface may, however continue upwards to the surface of the water, where it may again be reflected by the boundary between the water and the air above the water. Because the water-air boundary is a near perfect reflector, the seismic wavefield reflected from the water-air boundary may have a reflection coefficient of minus one and its propagation direction may change so that it propagates back towards the sub-surface. The downwardly reflecting seismic wavefield is commonly known as a "ghost." In some cases, the ghost may again reflect off of the sub-surface, and again reflect off of the water-air boundary, thus creating multiple reflections which may be referred to as surface multiples. Similarly, in land-based seismic acquisition, the recorded seismic wavefield may include surface related multiples, that are similar to the ghost and surface multiples encountered in marine-based applications.

Because the ghosts and/or surface multiples may distort or otherwise detract from the upgoing primary seismic wave of interest, it is common to "deghost" the wavefield in order to obtain a more accurate subsurface image from the measured seismic wavefield. This can be done, for example, by combining a pressure measurement from a hydrophone with one component (e.g., the vertical component) of a particle motion measurement from a geophone in order to separate the upgoing and downgoing components of the measured seismic wavefield. This is possible because both instruments can detect the changed reflection coefficient in the downgoing reflection from the water-air boundary and the particle motion sensor (e.g., geophone) can detect the change in propagation direction for the reflected seismic wavefield. By combining the pressure and particle motion measurements from both instruments, the wavefield can be deghosted by canceling the downgoing wavefield.

Because a geophone, for example, is a vectorial instrument, however, it is sensitive to the angle of incidence of the incoming seismic wave. Therefore, in order to accurately deghost the wavefield, the vectorial measurement of particle motion from a geophone may need to be corrected in order to account for the angle of incidence of the seismic wave, prior to combining the vectorial particle motion measurement with the scalar pressure measurement.

Methods for deghosting by combining the pressure and the corrected particle motion measurements are typically accomplished by transforming the measured data to the spatial and temporal Fourier domain, correcting the particle motion signal, and combining the two signals in the spatial Fourier domain. Transformation into the spatial Fourier domain, however, generally requires regularly and densely sampled measurements, typically from many different receivers. Obtaining regularly and densely sampled data may, however, be difficult in the cross-line direction for towed-streamer acquisitions or other acquisition systems, such as a nodal application. This lack of regularly and densely sampled data may prohibit effective deghosting at many angles of incidence in the Fourier domain. In order to overcome the lack of spatially regularly and densely sampled data, the existing data is sometimes interpolated in order to give the regular, dense samples needed for transformation into the Fourier domain. Such interpolation may, however, require additional data processing and, by its very nature, may introduce errors into the measured data set. US2006/050611 discloses a known method for attenuation of water bottom multiples in marine seismic data.

Therefore, methods and apparatuses are needed for deghosting of seismic wave fields where regularly and densely sampled data sets may not be available. The present invention provides a method for processing seismic data according to claim 1.

BRIEF DESCRIPTION OF THE DRAWINGS

FIG. 1 is a block diagram of a seismic surveying system.
FIG. 2 is a flow chart that illustrates one embodiment of a method performed in a seismic surveying system for deghosting seismic wavefields in the time domain.
FIG. 3 is a flow chart that illustrates another embodiment of a method performed in a seismic surveying system for deghosting seismic wavefields in the time domain.
FIG. 4A illustrates a top view of a marine-based seismic surveying system, including a vessel towing a seismic source and a plurality of seismic receivers positioned on streamers towed behind the vessel.
FIG. 4B illustrates a side view of the marine-based seismic surveying system of FIG. 4A.
FIG. 5 illustrates a perspective view of an ocean bottom cable seismic acquisition system.
FIG. 6 illustrates an embodiment of a computer system used in a seismic surveying system that is capable of storing and/or processing seismic data, such as to deghost seismic wave fields according to the operations in FIGS. 2 and 3.

DETAILED DESCRIPTION

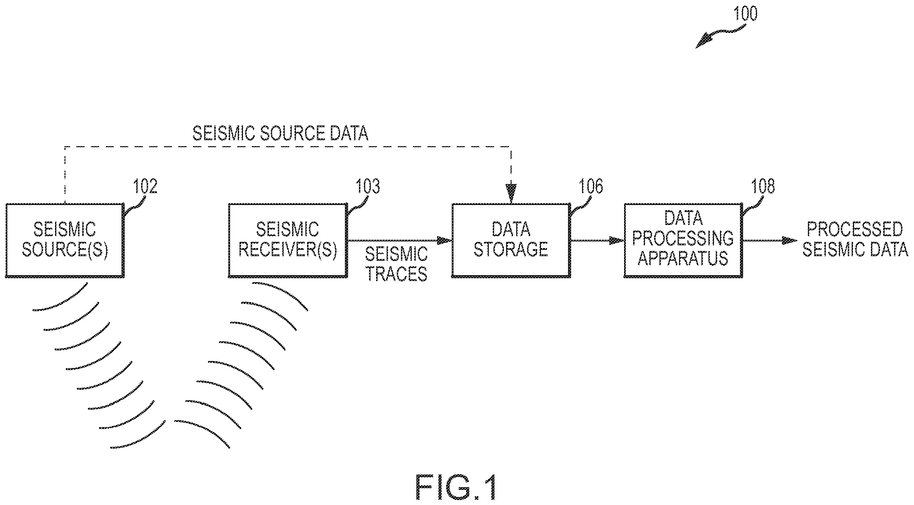

FIG. 1 illustrates one embodiment of a seismic surveying system 100. The seismic surveying system 100 includes one or more seismic sources 102, one or more seismic receivers 103, a data storage 106, and a data processing apparatus 108. The seismic surveying system 100 may be adapted for acquiring seismic data in any of a number of different geological settings. For example, the seismic surveying system 100 may be adapted for seismic acquisition in a land-based or marine-based setting in some embodiments.

The seismic source(s) 102 may be anything that emits seismic energy. For example the sources 102 may include one or more air guns (e.g., for use in a marine towed-streamer acquisition), one or more vibrators (e.g., vibe trucks for use on land), and so forth. In some examples, the seismic sources 102 may be naturally occurring, such as a geological disturbance, background seismic noise, or seismic activity induced by hydraulic fracturing. As illustrated in FIG. 1, in some examples, the seismic sources may provide seismic source data to a data storage 106. The seismic source data may include, for example, amplitudes, times, positions, and so forth of seismic source activity that can later be correlated with the received seismic traces from the receivers 103. In some examples, such as in a microseismic or in a seismic interferometry application, no seismic source data may be provided to the data storage 106.

Seismic energy emitted by the seismic sources may be detected by one or more seismic receiver(s) 103. Each seismic receiver includes one or more sensors that detect a disturbance of a medium at one or more points in time. For example, a seismic receiver 103 may include a pressure sensor such as a hydrophone in some embodiments. A hydrophone detects amplitudes of a pressure wavefield over time. Another example of a seismic receiver 103 may include a pressure gradient sensor, which detects the rate of change of a pressure wavefield over time. The pressure gradient sensor may detect the rate of change of pressure in one, two, or three directional components.

A seismic receiver may alternatively or additionally include a motion sensor, such as a geophone or an accelerometer. A motion sensor detects the motion of particles or of an elastic medium over time. A motion sensor may detect velocity, acceleration, or displacement, or some combination of these, and may do so in one, two, or three directional components. In an acoustic medium, such as water, particle motion may be proportional to the gradient of the pressure wavefield, and thus data acquired using a pressure gradient sensor may be used interchangeably with data acquired using a particle motion sensor.

In some examples, a seismic receiver 103 may be multi-component in that the receiver detects more than one type of disturbance - for example, a multi-component receiver towed in a streamer in a marine acquisition may include a hydrophone to detect pressure variations and three particle motion sensors to detect three components of motion of the water particles.

The seismic receivers 103 may be positioned proximate the seismic sources 102 during a seismic survey. During the seismic survey, one or more seismic sources 102 may be fired, and the one or more seismic receivers 103 may measure one or more disturbances and may generate one or more traces, which are sequences of measurements over a period of time. In general, each component of each sensor may generate a trace - so a multi-component receiver with a pressure sensor and three particle motion sensors may generate four traces. Each trace may include or may be associated with corresponding positional information, which may be provided by a navigation system (not shown in FIG. 1).

The seismic traces generated by the seismic receivers 103 may be provided to the data storage 106 in some embodiments. The data storage 106 may be a local data storage 106 near the seismic receiver 103 and may record seismic traces from a single receiver 103 in some examples, or may be a bulk data storage 106 located at a central station and may record seismic traces from a plurality of different receivers 103 in other examples. The data storage 106 may include one or more tangible mediums for storing the seismic traces, such as hard drives, magnetic tapes, solid state storage, volatile and non-volatile memory, and so forth. In some examples, the seismic traces from the seismic receivers 103 may bypass the data storage 106 and be provided directly to the data processing apparatus 108 in order to at least partially process the seismic traces in real-time or substantially real-time (e.g., to provide quality control information).

The data processing apparatus 108 may be any computing apparatus that is adapted to process and manipulate the seismic traces from the seismic receivers 103, and, in some embodiments, the seismic source data from the seismic sources 102. The data processing apparatus 108 may be a single computing device, or may be distributed among many computing nodes in some examples. In some examples, different computing apparatuses perform different data processing operations. For example, a first may deghost seismic traces, and another may migrate seismic traces to obtain an image of the earth's subsurface. An image of interest may be a spatial indication of discontinuities in acoustic impedance or the elastic reflectivity of the subsurface, and may be displayed on a tangible medium, such as a computer monitor or printed on a piece of paper. While some embodiments of the data processing apparatus 108 may process the seismic traces until a migrated image is obtained, in other examples, the data processing apparatus 108 may only partially process the seismic traces - for example, the data processing apparatus may merely deghost the seismic traces, and provide the processed and deghosted seismic traces to another process flow for further processing.

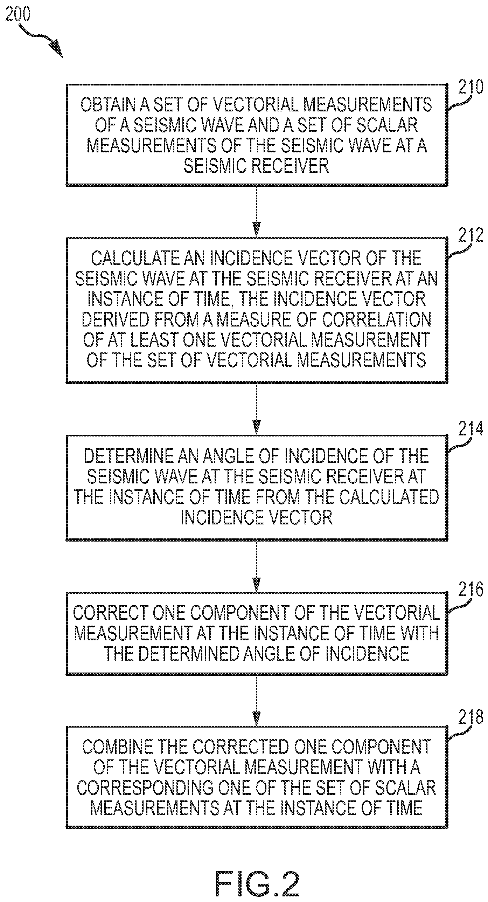

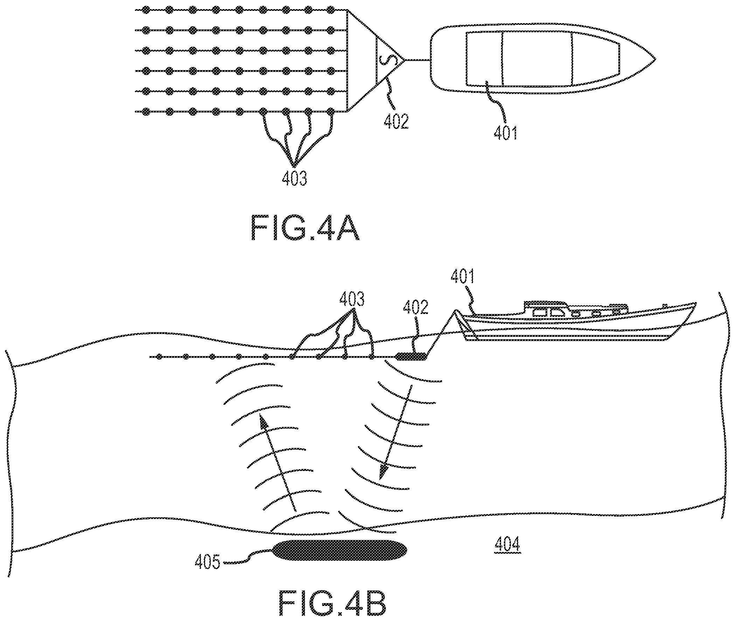

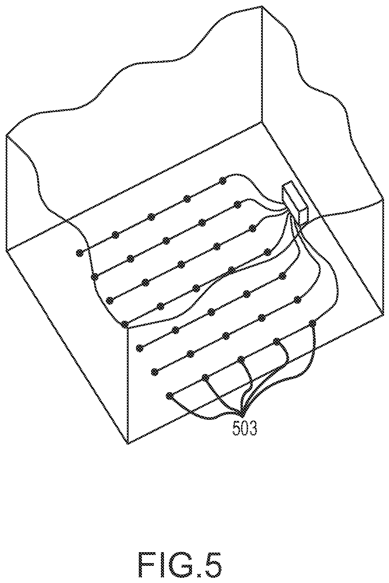

FIG 2. is a flowchart illustrating a method for deghosting seismic wave fields in the time domain that may be used in the data processing apparatus 108 of the seismic surveying system 100 based on seismic traces generated by one or more seismic receivers 103. Because the operations 200 illustrated in FIG. 2 can be carried out in the space and time domain and do not necessarily require transformation into the Fourier domain, they may be used for spatially irregularly or sparsely sampled data, including for example in the cross-line direction of data in towed marine acquisitions systems, such as illustrated in FIGS. 4A and 4B or even for irregularly shaped acquisition geometries. They may also be used in ocean bottom cable acquisition systems, as illustrated in FIG. 5.

In operation 210, a set of vectorial measurements of a seismic wavefield and a set of scalar measurements of the seismic wavefield are obtained at a seismic receiver, such as receiver 403 (FIG. 4) or receiver 503 (FIG. 5). Each one of the set of vectorial measurements may correspond to a respective one of the set of scalar measurements. For example, each one of the set of vectorial measurements may correspond to a particular instance of time (e.g., time = 0), and the corresponding scalar measurement may correspond to the same instance of time (e.g., time = 0). Each vectorial measurement may be or at least include particle motion measurements from a three-component particle motion sensor in some embodiments, and each scalar measurement may be or at least include a pressure measurement from a hydrophone in some embodiments. The particle motion measurements may be, for example, velocity, acceleration, or displacement. Alternatively, or in addition to a particle motion sensor (such as a geophone, a particle displacement sensor, a particle acceleration sensor, etc.) and/or a pressure sensor (such as a hydrophone), a pressure gradient sensor may be used, or an array of one or more of the above referenced sensors may be used.

Each vectorial measurement in the set of vectorial measurements may include a plurality of components. The first component may be a z-component, which may represent a vertical direction. The second and third components may be x- and y- components, which may represent two orthogonal horizontal directions.

In operation 212, an incidence vector of the seismic wavefield at the seismic receiver at a particular instance of time is calculated, with the incidence vector derived from a measure of correlation of at least one vectorial measurement of the set of vectorial measurements. The measure of correlation may in some embodiments be a measure of covariance. For example, the incidence vector may be an eigenvector of a covariance matrix derived from the components of at least one vectorial measurement. The covariance matrix may be generated using only the at least one vectorial measurement, or alternatively, the covariance matrix may be generated using two or more vectorial measurements from the set of vectorial measurements. In still other embodiments, the measure of correlation such as the covariance matrix may be generated from a range of vectorial measurements in a time-window, with the angle of incidence being found by sliding the time-window along the time axis. In general, the measure of correlation may be a measure of the covariance between the measurements of the different components of a single vectorial measurement, or between a plurality of vectorial measurements (such as an average among two, three, four, or even more vectorial measurements). Deriving the measure of correlation from a plurality of vectorial measurements may reduce the effects of noise that may otherwise dominate a single vectorial measurement. The time-window, when used, may be chosen based on the dominant frequency of the seismic wave of interest, and may be in some examples between 10 milliseconds and 200 milliseconds.

In still other examples, the measure of correlation may be derived from a range of vectorial measurements in a space-window. For example, vectorial data or a measure of correlation based on the vectorial data may be averaged over several different seismic receiver stations in order to reduce noise. In still other examples, the measure of correlation may be derived from a range of vectorial measurements in both a space-window and time-window.

The eigenvector of the covariance matrix used as the incidence vector may be the largest eigenvector of the covariance matrix in some embodiments, whereas in other embodiments, the incidence vector may be determined by using the two smallest eigenvectors of the covariance matrix, with the incidence vector being normal to a plane defined by the two smallest eigenvectors of the covariance matrix. In still other embodiments, the incidence vector may be related to, but not identical to, one of the eigenvectors of the covariance matrix.

The direction of the largest eigenvector of the covariance matrix may approximately correspond to the propagation direction of a seismic wavefield at a particular instance of time at the seismic sensor from which the data is being used, particularly if the seismic wave is linearly polarized (as the case may be for many seismic events in water). In some embodiments, only the angles that are related to seismic events are used to generate the covariance matrix and calculate the eigenvectors, as opposed to the noise in between or during the seismic events. This may be accomplished, for example, by using thresholding, or using local slope estimates.

In some examples, the magnitudes of one or more eigenvectors (or other measures of correlation) may be used to help separate seismic events of interest from noise. In some embodiments, the relative magnitude of one eigenvector compared to other eigenvectors of a covariance matrix may help determine whether a particular vectorial and corresponding scalar measurement corresponds to a seismic event of interest or to noise. For example, if the magnitude of the largest eigenvector is a certain multiple (e.g., 2X, 3X, 4X, etc.) of the magnitudes of the other eigenvectors, that measurement may be deemed a seismic event of interest, whereas if the magnitude of the largest eigenvector is only slightly larger (e.g., less than .5X) than the magnitudes of one or both other eigenvectors, that measurement may be deemed mere noise. In still other embodiments, the absolute magnitude of the largest eigenvector may be compared with other eigenvectors as a function of time to help separate seismic events of interest from noise. For example, if the absolute magnitude of the largest eigenvector of a covariance matrix (for a given window of samples) is plotted as a function of time, large amplitudes (with respect to the other, largest eigenvector magnitudes over time) may indicate a seismic event of interest.

In operation 214, an angle of incidence of the seismic wavefield at the seismic receiver at the particular instance of time is determined from the calculated incidence vector. In some embodiments, the angle of incidence may be the angle between the calculated incidence vector and the vertical axis.

In operation 216, one component of the vectorial measurement at the particular instance of time is corrected with the angle of incidence determined in operation 214. For example, the vertical component of the vectorial measurement may be scaled as a function of the angle of incidence. The vertical component of the vectorial measurement may, for example, be scaled by dividing it by the cosine of the angle of incidence. In other embodiments, one or more of the horizontal components of the vectorial measurement may be corrected using the angle of incidence.

In some embodiments, the one component of the vectorial measurement may also be multiplied by a scalar such as the acoustic impedance of the medium. For water, the acoustic impedance is equal to the product of the density of the water (which may be denoted $\rho$) and the velocity of seismic waves in the water (which may be denoted c). Multiplying the one component of the vectorial measurement by a scalar such as the acoustic impedance of water may allow the component of the vectorial measurement to be combined with a scalar (omnidirectional) measurement in operation 218, such as a pressure measurement.

In operation 218, the corrected component of the vectorial measurement at the particular instance of time is combined with the corresponding scalar measurement for the particular instance of time. The combined scalar measurement and corrected component of the vectorial measurement may represent, for example, the deghosted, upgoing portion of the seismic wavefield, or it may represent the downgoing portion of the seismic wavefield. Whether the combined measurements represent the upgoing or the downgoing portion of the seismic wavefield, or something else altogether, may depend, for example, on how the corrected component of the vectorial measurement and scalar measurement were combined. For example, if the corrected vertical component of the vectorial measurement is subtracted from the corresponding scalar measurement, the result may be the downgoing portion of the seismic wavefield, as shown in the following equation:

$$D(t) = \frac{1}{2}\left( P(t) - \frac{\rho c}{\cos\theta(t)} V_Z(t) \right)$$

where D(t) is the downgoing portion of the seismic wavefield at instance of time t, P(t) is the pressure measurement at instance of time t, and $V_z(t)$ is the vertical component of the particle motion (e.g., velocity) measurement at instance of time t, c is the velocity of acoustic waves in water, $\rho$ is the density of the water, and $\theta(t)$ is the angle with the vertical at instance of time t. D, P and V may all be related to the same measurement location in space.

As another example, if the corrected vertical component of the vectorial measurement is added to the corresponding scalar measurement, the result may be the deghosted upgoing portion of the seismic wavefield, as shown in the following equation:

$$U(t) = \frac{1}{2}\left( P(t) + \frac{\rho c}{\cos\theta(t)} V_z(t) \right)$$

where D(t) is the downgoing portion of the seismic wavefield at instance of time t, P(t) is the pressure measurement at instance of time t, and $V_z(t)$ is the vertical component of the particle motion (e.g., velocity) measurement at instance of time t, c is the velocity of acoustic waves in water, $\rho$ is the density of the water, and $\theta(t)$ is the angle with the vertical at instance of time t. D, P and V may all be related to the same measurement location in space.

Although the operations 200 illustrated in the flowchart of FIG. 2 illustrate a method of deghosting a seismic wavefield performed in a seismic surveying system at one particular instance of time, the operations described herein may be repeated for each of a plurality of instances of time in order to deghost the wavefield over a period of time. For example, when the set of vectorial and scalar measurements correspond to a plurality of instances of time, the angle of incidence of the seismic wave may be determined for each of the plurality of instances of time by performing an iteration of operations 212 and 214 for each instance of time. The angle of incidence as a function of time thus determined may then be used to iteratively correct the one component of the respective vectorial measurements at each of the instances of time (operation 216), and the respective corrected vectorial measurements may be combined with the respective scalar measurements for each of the instances of time (operation 218). In this manner, using sliding windows of time, the incidence vector and the corresponding angle of incidence of the seismic wavefield can be estimated as a function of time.

Also, although the operations 200 illustrated in the flowchart of FIG. 2 illustrate a method of deghosting a seismic wavefield at one particular seismic receiver, the operations described herein may be repeated for each of a plurality of seismic receivers in order to correct the upgoing wavefield using the angle of incidence of the seismic wavefield at each individual receiver. Nonetheless, although the operations 200 may be carried out for each of a plurality of seismic receivers, in some embodiments, data measured at each seismic receiver may not be used in determining the angle of incidence and correcting the wavefield in the traces recorded in any of the other seismic receivers (e.g., the operations 200 may be a single station system and method).

Although the above description refers to using the covariance matrix and one or more eigenvectors of the covariance matrix, it is to be understood that the incidence vector and/or the angle of incidence of the seismic wavefield may be determined in alternate ways, such as by using a correlation matrix of the set of vectorial measurements, or by using any type of polarization filter analysis on the set of vectorial measurements, or by doing any type of statistical analysis on the set of vectorial measurements, and so forth. Furthermore, specific eigenvectors need not be used to determine the incidence vector, but rather, any method may be used to find trends in the set of vectorial measurements (and/or the pressure measurements in some embodiments) in order to estimate the propagation direction of the seismic wavefield. Furthermore, as described above, different types of sensors other than a geophone and hydrophone may be used. For example, a pressure gradient sensor may be used, in which case the covariance matrix may be generated based on the vertical gradient of the pressure (because the vertical gradient of the pressure measured by a pressure gradient sensor may be proportional to the vertical component of the particle motion measured by a particle motion sensor). In general, many different types of seismic sensors may be used, and many methods may be used to estimate the propagation direction of the seismic wavefield to scale a vectorial measurement with the angle of incidence of the seismic wavefield in order to be able to effectively deghost a seismic wavefield.

As mentioned above, the operations 200 may be carried out entirely in the space and time domain in some embodiments, and the operations 200 may be considered a single station system and method. In other embodiments, however, one or more of the operations 200 may be carried out in either the spatial or the temporal Fourier domain, or one or more of the operation 200 may be carried out in the time domain and combined with a separate Fourier domain analysis of the measured vectorial and/or scalar measurements from the one or more seismic receivers.

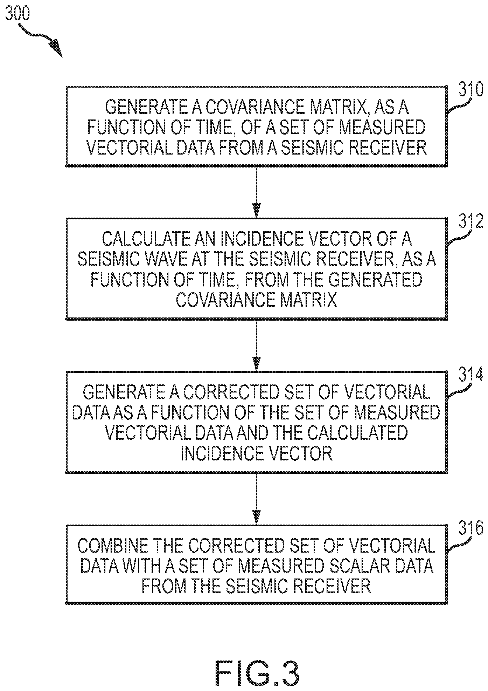

FIG. 3 is a flowchart illustrating another embodiment of a method that may be performed in a seismic surveying system 100 for deghosting seismic wavefields in the space and time domain. Because the operations 300 illustrated in FIG. 3 may be carried out in the space and time domain and do not necessarily require transformation into the Fourier domain, they may be used for spatially (as well as temporally) irregularly or sparsely sampled data, including for example in the cross-line direction of data in towed marine acquisitions systems or even for irregularly shaped acquisition geometries. They may also be used in ocean bottom cable acquisition systems.

In operation 310, a covariance matrix of a set of measured vectorial data from a seismic receiver is generated as a function of time. Similar to operation 212, the covariance matrix may be generated from a single vectorial measurement, or from a plurality of vectorial measurements over a period of time.

In operation 312, an incidence vector of a seismic wavefield at the seismic receiver is calculated from the covariance matrix as a function of time. In some embodiments, the incidence vector may be the largest eigenvector of the covariance matrix. As in operation 212, the incidence vector may correspond to the propagation direction of the seismic wavefield as a function of time.

In operation 314, a corrected set of vectorial data is generated as a function of the calculated incidence vector and the set of measured vectorial data. For example, the corrected set of vectorial data may include only the vertical component of the vectorial data scaled by a function of the incidence vector for each instance in time.

In operation 316, the corrected set of vectorial data is combined with a set of measured scalar data from the seismic receiver.

As with the operations 200, the operations 300 illustrated in the flowchart of FIG. 3 may be carried out in the space and time domain. Also as with the operations 100, the operations 300 illustrated in FIG.3 may be carried out on a single station basis, without the need for traces at a single receiver to reference other traces recorded at other receivers. Also, the operations 300 illustrated in FIG. 3 may be similar to the operations 200 illustrated in FIG. 2, and therefore, the description of each set of operations generally may apply to the other set of operations in some respects.

Furthermore, the angle of incidence of the seismic wavefield calculated according to the operations 212, 214, 312 described herein may be used in other ways, including in other ways to deghost a seismic wavefield. As just one example of another way that the angle of incidence of the seismic wavefield may be used to deghost a seismic wavefield, the angle of incidence may be used to calculate an operator that predicts the arrival of the seismic wave (or a part of the seismic wave, such as a downgoing ghost) at one or more seismic receivers. In general, the angle of incidence of the seismic wavefield at one or more seismic receivers at one or more instances of time may be provided as input to the operator, and the operator may predict the arrival of the seismic wave or a part of the seismic wave at one or more seismic receivers (which may or may not be the same as the one or more seismic receivers whose measurements are provided to the operator to determine the angle of incidence of the seismic wavefield). In those instances where the operator uses an angle of incidence at a first seismic receiver to predict the arrival of the seismic wave or part of the seismic wave at a second seismic receiver distinct from the first seismic receiver, the operator may be a space-domain operator. In those instances where the operator uses an angle of incidence at a first instance of time to predict the arrival of the seismic wave or part of the seismic wave at a second instance of time after the first instance of time, the operator may be a time-domain operator. Furthermore, the operator may be both a time- and a space-domain operator. The operator may be used, for example, in a space and/or time deconvolution-type approach to deghosting the seismic wavefield instead of a weighted sum of pressure and motion measurements for a single instance of time.

FIG. 4A illustrates a bird's eye view of a marine-based seismic surveying system including a vessel 401 towing a source 402 and several seismic receivers 403 on streamers 410 behind the vessel 401. FIG. 4B illustrates a side-view of the vessel 401 shown in FIG. 4A with the source 402 and receivers 403 being towed behind the vessel 401 just beneath the surface of the water. The receivers 403 may be, for example, any of the sensors described in co-owned pending application number 13/222,563 filed non-provisionally on August 31, 2011 and entitled "Multi-component, Acoustic-Wave Sensor and Methods," or the sensors described in co-owned pending application number 13/011,358 filed non-provisionally on January 21, 2011 and entitled "Seismic System with Ghost and Motion Rejection." For the sake of discussion, the embodiment depicted in FIGS. 4A and 4B illustrates the source and receiver being towed by the same vessel, however, other possible combinations are possible. For example, in other embodiments, either the source and/or receivers may be towed by separate vessels or may be implemented in land-based acquisition systems. In still other embodiments, the source and/or receivers may be stationary while the other is towed behind the vessel. Furthermore, although not specifically shown, in some embodiments, the receivers 403 may be positioned deeper in the water, for example, by using streamer steering devices, such as the DigiFIN® brand steering device available from ION Geophysical Corporation. In still other embodiments, streamers may be towed at different depths (known as over/under streamers), and the over/under streamers may provide pressure gradient information as vectorial data in some instances. For the sake of discussion, this detailed description focuses primarily on seismic data acquired in marine environments. However, as mentioned, the concepts described herein apply more generally to, for example, land-based systems and other acquisition systems. Other acquisition geometries that may be used include a vertical cable in a marine environment or a borehole on land.

During operation, the source 402 may emit or "fire" seismic energy (e.g., through an air gun), which may reflect off various portions of the Earth 404 and may be received back at the receivers 403. The signal received and processed at the receivers 403 may indicate the composition of various portions of the Earth 404 proximate the location where the signal was reflected and indicate an oil and/or gas reservoir 405. In some embodiments, the signal received at the receivers is transmitted to a storage medium on the vessel towing the receivers for storage. The storage medium can be part of a comprehensive data processing system or can take the form of a stand alone data logging storage device. The received and stored signal may, in some embodiments be processed by computers or servers on-board the vessel in real-time, near real-time, or in some cases may not be processed at all on-board but simply recorded for processing at a later time. Alternatively, the signals can be transmitted from the vessel to a remote location for processing.

The operations 200, 300 described above in connection with FIGS. 2 and 3 may be used in the towed streamer acquisition system illustrated in FIGS. 4A and 4B in some embodiments to, for example, deghost the wavefield measured by the receivers 403.

FIG. 5 illustrates a perspective view of an ocean bottom cable acquisition with a plurality of receivers 503. The operations 200, 300 described above in connection with FIGS. 2 and 3 may be used in the ocean bottom cable acquisition system illustrated in FIG. 5 in some embodiments to, for example, deghost the wavefield measured by the receivers 503.

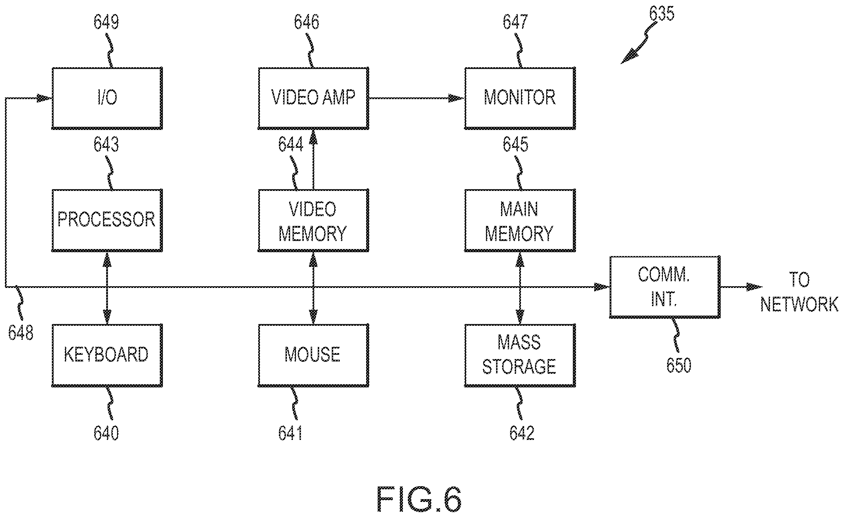

FIG. 6 illustrates an embodiment of a computer system 635 capable of processing seismic data, including for example, a system capable of executing the operations in FIGS. 2 and 3. The computer system 635 illustrated in FIG. 6 may be used as the data processing apparatus 108 in FIG. 1 in some examples.

In some embodiments, the computer system 635 may be a personal computer and/or a handheld electronic device. In other embodiments, the computer system 635 may be an implementation of enterprise level computers, such as one or more blade-type servers within an enterprise. In still other embodiments, the computer system 635 may be any type of server. The computer system 635 may be onboard a vessel (such as vessel 301 shown in FIGS. 3A and 3B), may be on a remotely controlled drone boat, may be on land in a vehicle, may be in land in a facility, or any other place.

A keyboard 640 and mouse 641 may be coupled to the computer system 635 via a system bus 648. The keyboard 640 and the mouse 641, in one example, may introduce user input to the computer system 635 and communicate that user input to a processor 643. Other suitable input devices may be used in addition to, or in place of, the mouse 641 and the keyboard 640. An input/output unit 649 (I/O) coupled to the system bus 648 represents such I/O elements as a printer, audio/video (A/V) I/O, etc.

Computer 635 also may include a video memory 644, a main memory 645 and a mass storage 642, all coupled to the system bus 648 along with the keyboard 640, the mouse 641 and the processor 643. The mass storage 642 may include both fixed and removable media, such as magnetic, optical or magnetic optical storage systems and any other available mass storage technology. The bus 648 may contain, for example, address lines for addressing the video memory 644 or the main memory 645.

The system bus 648 also may include a data bus for transferring data between and among the components, such as the processor 643, the main memory 645, the video memory 644 and the mass storage 642. The video memory 644 may be a dual-ported video random access memory. One port of the video memory 644, in one example, is coupled to a video amplifier 646, which is used to drive one or more monitor(s) 647. The monitor(s) 647 may be any type of monitor suitable for displaying graphic images, such as a cathode ray tube monitor (CRT), flat panel, or liquid crystal display (LCD) monitor or any other suitable data presentation device.

The computer system includes a processor unit 643, which may be any suitable microprocessor or microcomputer. The computer system 635 also may include a communication interface 650 coupled to the bus 648. The communication interface 650 provides a two-way data communication coupling via a network link. For example, the communication interface 650 may be a satellite link, a local area network (LAN) card, a cable modem, and/or wireless interface. In any such implementation, the communication interface 650 sends and receives electrical, electromagnetic or optical signals that carry digital data representing various types of information.

Code received by the computer system 635 may be executed by the processor 643 as the code is received, and/or stored in the mass storage 642, or other non-volatile storage for later execution. In this manner, the computer system 635 may obtain program code in a variety of forms. Program code may be embodied in any form of computer program product such as a medium configured to store or transport computer readable code or data, or in which computer readable code or data may be embedded. Examples of computer program products include CD-ROM discs, ROM cards, floppy disks, magnetic tapes, computer hard drives, servers on a network, and solid state memory devices. Regardless of the actual implementation of the computer system 635, the data processing system may execute operations that allow for processing seismic data, including for example the operations illustrated in FIGS. 1 through 2 and described herein.

The apparatuses and associated methods in accordance with the present disclosure have been described with reference to particular embodiments thereof in order to illustrate the principles of operation. The above description is thus by way of illustration and not by way of limitation. Various modifications and alterations to the described embodiments will be apparent to those skilled in the art in view of the teachings herein. Those skilled in the art may, for example, be able to devise numerous systems, arrangements and methods which, although not explicitly shown or described herein, embody the principles described in this disclosure.

For example, although the above description details one type of seismic signal processing that may be done in the space and time domain, this space and time domain signal processing may be combined with signal processing done in other domains, such as the spatial and/or temporal Fourier domains. The combination of processing in multiple domains may help, for example, to resolve any ambiguities when multiple events happen in proximity (in time) to one another on a single seismic sensor. In some examples, data processed in one domain may be weighted and combined with weighted data processed in another domain - for example, data processed in the space-time domain may be assigned a certain weight based on an estimate of the number of overlapping events, data processed in one or both of the temporal and spatial Fourier domains may be assigned a certain weight based on the geometry and spacing of the seismic receivers, and then the weighted data from the two different domains may be summed together. In another example, small time windows may be analyzed in both domains - for example, data obtained during a first time window may be analyzed in the space-time domain to determine an angle of incidence using the methods described herein, and the same data from the first time window may be analyzed in the spatial and/or temporal Fourier domains using the determined angle of incidence to remove a ghost signal.

Also, in some embodiments, the angle of incidence (and/or incidence vector) calculated in operations 212, 214, 312 may be smoothed prior to or contemporaneous with correcting or combining components. Also, although FIGS. 4A through 5 illustrate two different acquisition system types, the systems and methods described herein may be employed in still other types of acquisition systems, such as a node survey, even when the node survey includes only a single seismic receiver. Also, although FIGS. 4A through 5 illustrate rows of receivers 403, 503 that are generally parallel to one another, the systems and methods described herein may be used in different acquisition geometries, including irregularly shaped acquisition geometries. Also, the operations illustrated in FIGS. 2 and 3 may be carried out onsite simultaneously with the data acquisition, onsite soon after data acquisition, offsite soon after data acquisition, offsite at a later time, and so forth.

Accordingly, it is intended that all such alterations, variations, and modifications of the disclosed embodiments are within the scope of this disclosure as defined by the appended claims.

In methodologies directly or indirectly set forth herein, various steps and operations are described in one possible order of operation, but those skilled in the art will recognize that the steps and operations may be rearranged, replaced, or eliminated within the scope of the disclosure.

All relative and directional references (including: upper, lower, upward, downward, upgoing, downgoing, left, right, top, bottom, side, above, below, front, middle, back, vertical, horizontal, and so forth) are given by way of example to aid the reader's understanding of the particular embodiments described herein. They should not be read to be requirements or limitations, particularly as to the position, orientation, or use of the invention unless specifically set forth in the claims. Connection references (e.g., attached, coupled, connected, joined, and the like) are to be construed broadly and may include intermediate members between a connection of elements and relative movement between elements. As such, connection references do not necessarily infer that two elements are directly connected and in fixed relation to each other, unless specifically set forth in the claims.

**Claims**

1. A method for processing seismic data, comprising the acts of:
   obtaining a set of vectorial measurements of a seismic wavefield at a seismic receiver (103, 403, 503) and a set of scalar measurements of the seismic wavefield at the seismic receiver, each vectorial measurement in the set comprising a plurality of components, and each vectorial and scalar measurement in the respective sets corresponding to a respective instance of time (210); the method **characterized by** further comprising the steps of:

   determining an angle of incidence of the seismic wavefield at the seismic receiver at a first instance of time by calculating an incidence vector of the seismic wavefield at the seismic receiver at the first instance of time, the incidence vector derived from a measure of covariance between different components of at least one vectorial measurement of the set of vectorial measurements (212, 214) or between a plurality of vectorial measurements of the set of vectorial measurements;

   correcting a component of a vectorial measurement in the set of vectorial measurements with the determined angle of incidence at the first instance of time (216); and
   combining the corrected component of the vectorial measurement with a scalar measurement in the set of scalar measurements that corresponds to the first instance of time (218).

2. The method of claim 1, further comprising:

   displaying data derived using at least the combined vectorial and scalar measurement;
   or
   migrating the set of scalar measurements to form a seismic image and displaying the seismic image on a tangible medium.

3. The method of claim 1, wherein data including the combined vectorial and scalar measurement are stored on a storage medium which is sold for subsequent data processing.

4. The method of claim 1, wherein:

the vectorial measurement that is corrected corresponds to the same instance of time as the determined angle of incidence;
and/or
the at least one vectorial measurement of the set of vectorial measurements from which the incidence vector is derived corresponds to the same instance of time as the determined angle of incidence.

5. The method of claim 1, wherein each vectorial measurement of the set of vectorial measurements comprises a first component representing a z-direction, a second component representing an x-direction, and a third component representing a y-direction.

6. The method of claim 1, further comprising:

determining the angle of incidence of the seismic wavefield for each of a plurality of instances of time by calculating the incidence vector at each respective instance of time; correcting respective components of a plurality of vectorial measurements in the set of vectorial measurements with the determined angle of incidence at each respective instance of time; and
combining the corrected components of the vectorial measurements with respective scalar measurement at each respective instance of time in order to deghost the seismic wavefield.

7. The method of claim 1, wherein the combined corrected component of the vectorial measurement and scalar measurement represents a deghosted, upgoing portion of the seismic wavefield, and wherein the deghosted, upgoing portion of the seismic wavefield is calculated from

$$U(t) = \frac{1}{2}\left( P(t) + \frac{\rho c}{\cos\theta(t)} V_z(t) \right)$$

where U(t) represents the deghosted, upgoing portion of the seismic wavefield, P(t) represents the scalar measurement as a function of time, $V_z(t)$ represents the component of the vectorial measurement as a function of time, $\theta(t)$ represents the angle of incidence with respect to the vertical as a function of time, $\rho c$ represents an acoustic impedance, and U, P and $V_z$ all relate to the same spatial location.

8. The method of claim 1, wherein the combined corrected component of the vectorial measurement and scalar measurement represent a downgoing portion of the seismic wavefield, and wherein the downgoing portion of the seismic wavefield is calculated from

$$D(t) = \frac{1}{2}\left( P(t) - \frac{\rho c}{\cos\theta(t)} V_z(t) \right)$$

where D(t) represents the downgoing portion of the seismic wavefield, P(t) represents the scalar measurement as a function of time, $V_z(t)$ represents the component of the vectorial measurement as a function of time, $\theta(t)$ represents the angle of incidence with respect to the vertical as a function of time, and $\rho c$ represents an acoustic impedance, and D, P and Vz all relate to the same spatial location.

9. The method of claim 1, wherein the vectorial measurement comprises a particle velocity measurement and the scalar measurement comprises a pressure measurement.

10. The method of claim 1, wherein the component of the vectorial measurement is a vertical component, and the angle of incidence is defined with respect to the vertical component.

11. The method of claim 1, wherein the component of the vectorial measurement comprises a combination of two horizontal components.

12. The method of claim 1, wherein the angle of incidence of the seismic wavefield is determined in the time domain.

13. The method of claim 1, wherein the seismic receiver is a first seismic receiver and further wherein the incidence vector is calculated and the vectorial measurement is corrected without reference to a set of vectorial measurements from a second seismic receiver.

14. A system for processing seismic data, comprising:

> a seismic receiver (103, 403, 503) configured to capture a set of vectorial measurements and a set of scalar measurements of a seismic wavefield at each of a plurality of instances of time, each vectorial measurement in the set comprising a plurality of components, and each vectorial and scalar measurement in the respective sets corresponding to a respective one of the plurality of instances of time;
> a storage unit (106) configured to store the set of vectorial measurements and the set of scalar measurements from the seismic receiver;
> the system is **characterized by** further comprising a processor (108) configured to determine an angle of incidence of the seismic wavefield at the seismic receiver at a first instance of time by calculating an incidence vector of the seismic wavefield at the seismic receiver at the first instance of time, the incidence vector derived from a measure of covariance between different components of at least one vectorial measurement of the set of vectorial measurements (212, 214) or between a plurality of vectorial measurements of the set of vectorial measurements;
> correct a component of a vectorial measurement in the set of vectorial measurements with the determined angle of incidence at the first instance of time (216); and
> combine the corrected component of the vectorial measurement with a scalar measurement in the set of scalar measurements that corresponds to the first instance of time (218).

15. A tangible storage medium for storing a plurality of instructions, the instructions comprising:

> obtaining a set of vectorial measurements of a seismic wavefield at a seismic receiver and a set of scalar measurements of the seismic wavefield at the seismic receiver, each vectorial measurement in the set comprising a plurality of components, and each vectorial and scalar measurement in the respective sets corresponding to a respective instance of time (210);
> **characterized by** further comprising:

>> determining an angle of incidence of the seismic wavefield at the seismic receiver at a first instance of time by calculating an incidence vector of the seismic wavefield at the seismic receiver at the first instance of time, the incidence vector derived from a measure of covariance between different components of at least one vectorial measurement of the set of vectorial measurements (212, 214) or between a plurality of vectorial measurements of the set of vectorial measurements;
>> correcting a component of a vectorial measurement with the determined angle of incidence at the first instance of time (216); and
>> combining the corrected component of the vectorial measurement with a scalar measurement in the set of scalar measurements that corresponds to the first instance of time (218).

**Patentansprüche**

1. Verfahren zur Verarbeitung seismischer Daten, das die folgenden Schritte umfasst:

> - Gewinnen eines Satzes vektorieller Messungen eines seismischen Wellenfeldes an einem seismischen Empfänger (103, 403, 503) und eines Satzes skalarer Messungen des seismischen Wellenfeldes an dem seismischen Empfänger, wobei jede vektorielle Messung in dem Satz eine Vielzahl von Komponenten umfasst und jede vektorielle und skalare Messung in den jeweiligen Sätzen dem betreffenden Zeitpunkt (210) entspricht, wobei das Verfahren **dadurch gekennzeichnet ist, dass** es ferner die Schritte umfasst:
> - Bestimmen eines Einfallswinkels des seismischen Wellenfeldes am seismischen Empfänger zu einem ersten Zeitpunkt durch Berechnen des Einfallsvektors des seismischen Wellenfeldes am seismischen Empfänger zum ersten Zeitpunkt, wobei der Einfallsvektor aus dem Maß der Kovarianz zwischen verschiedenen Komponenten von mindestens einer vektoriellen Messung des Satzes vektorieller Messungen (212, 214) oder zwischen einer Mehrzahl von vektoriellen Messungen des Satzes vektorieller Messungen abgeleitet ist,
- Korrigieren einer Komponente einer vektoriellen Messung im Satz vektorieller Messungen mit dem bestimmten Einfallswinkel zum ersten Zeitpunkt (216), und
- Kombinieren der korrigierten Komponente der vektoriellen Messung mit einer skalaren Messung im Satz skalarer Messungen, die dem ersten Zeitpunkt entspricht (218).

2. Verfahren nach Anspruch 1, ferner umfassend:

- Anzeigen von Daten, die unter Verwendung zumindest der kombinierten vektoriellen und skalaren Messung abgeleitet wurden,
oder
- Migrieren des Satzes skalarer Messungen zum Erzeugen eines seismischen Bildes und Anzeigen des seismischen Bildes auf einem greifbaren Medium.

3. Verfahren nach Anspruch 1, wobei Daten, die die kombinierte vektorielle und skalare Messung enthalten, auf einem Speichermedium gespeichert werden, das für die nachfolgende Datenverarbeitung verkauft wird.

4. Verfahren nach Anspruch 1, wobei:

- die vektorielle Messung, die korrigiert wird, demselben Zeitpunkt entspricht wie der ermittelte Einfallswinkel, und/oder
- die mindestens eine vektorielle Messung aus dem Satz vektorieller Messungen, aus dem der Einfallsvektor abgeleitet ist, demselben Zeitpunkt wie der ermittelte Einfallswinkel entspricht.

5. Verfahren nach Anspruch 1, wobei jede vektorielle Messung des Satzes vektorieller Messungen eine erste Komponente, die die z-Richtung darstellt, eine zweite Komponente, die die x-Richtung darstellt, und eine dritte Komponente, die die y-Richtung darstellt, umfasst.

6. Verfahren nach Anspruch 1, ferner umfassend:

- Bestimmen des Einfallswinkels des seismischen Wellenfeldes für jeden einer Vielzahl von Zeitpunkten durch Berechnen des Einfallsvektors zu jedem jeweiligen Zeitpunkt, Korrigieren der jeweiligen Komponenten der Vielzahl von vektoriellen Messungen in dem Satz vektorieller Messungen mit dem bestimmten Einfallswinkel zu jedem jeweiligen Zeitpunkt, und
- Kombinieren der korrigierten Komponenten der vektoriellen Messungen mit der jeweiligen skalaren Messung zu jedem entsprechenden Zeitpunkt, um das seismische Wellenfeld von Geisterreflexionen zu befreien.

7. Verfahren nach Anspruch 1, wobei die kombinierte korrigierte Komponente der vektoriellen Messung und der skalaren Messung einen von Geisterreflexion befreiten, aufwärts gerichteten Teil des seismischen Wellenfeldes darstellt, und wobei der von Geisterreflexion befreite, aufwärts gerichtete Teil des seismischen Wellenfeldes berechnet wird aus

$$U(t) = \frac{1}{2}\left( P(t) + \frac{\rho c}{\cos\theta(t)} V_z(t) \right),$$

wobei U(t) den von Geisterreflexion befreiten, aufwärts gerichteten Teil des seismischen Wellenfeldes darstellt, P(t) die skalare Messung als Funktion der Zeit darstellt, $V_z(t)$ die Komponente der vektoriellen Messung als Funktion der Zeit darstellt, $\theta(t)$ den Einfallswinkel in Bezug auf die Vertikale als Funktion der Zeit darstellt, $\rho c$ die akustische Impedanz darstellt und U, P und $V_z$ sich alle auf denselben räumlichen Ort beziehen.

8. Verfahren nach Anspruch 1, wobei die kombinierte korrigierte Komponente der vektoriellen Messung und der skalaren Messung einen abwärts gerichteten Teil des seismischen Wellenfeldes darstellt, und wobei der abwärts gerichtete Teil des seismischen Wellenfeldes berechnet wird aus

$$D(t) = \frac{1}{2}\left(P(t) - \frac{\rho c}{\cos\theta(t)}V_z(t)\right),$$

wobei D(t) den abwärts gerichteten Teil des seismischen Wellenfeldes darstellt, P(t) die skalare Messung als Funktion der Zeit darstellt, $V_z$(t) die Komponente der vektoriellen Messung als Funktion der Zeit darstellt, θ(t) den Einfallswinkel in Bezug auf die Vertikale als Funktion der Zeit darstellt und ρc die akustische Impedanz darstellt und D, P und $V_z$ sich alle auf denselben räumlichen Ort beziehen.

9. Verfahren nach Anspruch 1, wobei die vektorielle Messung eine Partikelgeschwindigkeitsmessung und die skalare Messung eine Druckmessung umfasst.

10. Verfahren nach Anspruch 1, wobei die Komponente der vektoriellen Messung eine vertikale Komponente ist und der Einfallswinkel in Bezug auf die vertikale Komponente definiert ist.

11. Verfahren nach Anspruch 1, wobei die Komponente der vektoriellen Messung eine Kombination aus zwei horizontalen Komponenten umfasst.

12. Verfahren nach Anspruch 1, wobei der Einfallswinkel des seismischen Wellenfeldes im Zeitbereich bestimmt wird.

13. Verfahren nach Anspruch 1, wobei der seismische Empfänger ein erster seismischer Empfänger ist und wobei ferner der Einfallsvektor berechnet und die vektorielle Messung ohne Bezugnahme auf einen Satz vektorieller Messungen von einem zweiten seismischen Empfänger korrigiert wird.

14. Ein System zur Verarbeitung seismischer Daten, das Folgendes umfasst:

    - einen seismischen Empfänger (103, 403, 503), der so konfiguriert ist, dass er einen Satz vektorieller Messungen und einen Satz skalarer Messungen eines seismischen Wellenfeldes zu jedem einer Vielzahl von Zeitpunkten erfasst, wobei jede vektorielle Messung in dem Satz eine Vielzahl von Komponenten umfasst und jede vektorielle und skalare Messung in den jeweiligen Sätzen einem betreffenden der Vielzahl von Zeitpunkten entspricht,
    - eine Speichereinheit (106), die so konfiguriert ist, dass sie den Satz vektorieller Messungen und den Satz skalarer Messungen von dem seismischen Empfänger speichert, und dass das System **dadurch gekennzeichnet ist, dass** es ferner einen Prozessor (108) umfasst, der konfiguriert ist zum
    - Bestimmen eines Einfallswinkels des seismischen Wellenfeldes am seismischen Empfänger zu einem ersten Zeitpunkt durch Berechnen des Einfallsvektors des seismischen Wellenfeldes am seismischen Empfänger zum ersten Zeitpunkt, wobei der Einfallsvektor aus dem Maß der Kovarianz zwischen verschiedenen Komponenten von mindestens einer vektoriellen Messung des Satzes vektorieller Messungen (212, 214) oder zwischen einer Mehrzahl von vektoriellen Messungen des Satzes vektorieller Messungen abgeleitet ist,
    - Korrigieren einer Komponente einer vektoriellen Messung in dem Satz von vektoriellen Messungen mit dem bestimmten Einfallswinkel zum ersten Zeitpunkt (216), und
    - Kombinieren der korrigierten Komponente der vektoriellen Messung mit einer skalaren Messung im Satz skalarer Messungen, die dem ersten Zeitpunkt entspricht (218).

15. Ein greifbares Speichermedium zum Speichern einer Vielzahl von Befehlen, wobei die Befehle Folgendes umfassen:

    - Gewinnen eines Satzes vektorieller Messungen eines seismischen Wellenfeldes an einem seismischen Empfänger und eines Satzes skalarer Messungen des seismischen Wellenfeldes an dem seismischen Empfänger, wobei jede vektorielle Messung in dem Satz eine Vielzahl von Komponenten umfasst und jede vektorielle und skalare Messung in den jeweiligen Sätzen dem betreffenden Zeitpunkt (210) entspricht,

    **dadurch gekennzeichnet, dass** es ferner umfasst:

    - Bestimmen eines Einfallswinkels des seismischen Wellenfeldes am seismischen Empfänger zu einem ersten Zeitpunkt durch Berechnen des Einfallsvektors des seismischen Wellenfeldes am seismischen Empfänger zum ersten Zeitpunkt, wobei der Einfallsvektor aus dem Maß der Kovarianz zwischen verschiedenen Komponenten von mindestens einer vektoriellen Messung des Satzes vektorieller Messungen (212, 214) oder zwischen einer Mehrzahl von vektoriellen Messungen des Satzes vektorieller Messungen abgeleitet ist,
- Korrigieren einer Komponente einer vektoriellen Messung im Satz vektorieller Messungen mit dem bestimmten Einfallswinkel zum ersten Zeitpunkt (216) und
- Kombinieren der korrigierten Komponente der vektoriellen Messung mit einer skalaren Messung im Satz skalarer Messungen, die dem ersten Zeitpunkt entspricht (218).

**Revendications**

1. Procédé de traitement de données sismiques comprenant les opérations consistant à :

   - obtenir un jeu de mesures vectorielles d'un champ d'ondes sismiques dans un récepteur sismique (103, 403, 503) et un jeu de mesures scalaires du champ d'ondes sismiques dans le récepteur sismique, chaque mesure vectorielle du champ comprenant un ensemble de composantes et chaque mesure vectorielle et chaque mesure scalaire des jeux respectifs correspondant à un instant respectif (210),

   procédé **caractérisé en outre par** les étapes consistant à :

   - déterminer un angle d'incidence du champ d'ondes sismiques dans le récepteur sismique à un premier instant en calculant un vecteur d'incidence du champ d'ondes sismiques dans le récepteur sismique à un premier instant, le vecteur d'incidence étant dérivé d'une mesure de covariance entre les différentes composantes d'au moins une mesure vectorielle du jeu de mesures vectorielles (212, 214) ou entre un ensemble de mesures vectorielles du jeu de mesures vectorielles,
   - corriger une composante d'une mesure vectorielle dans le jeu de mesures vectorielles avec un angle d'incidence déterminé à un premier instant (216), et
   - combiner la composante corrigée de la mesure vectorielle avec une mesure scalaire dans le jeu des mesures scalaires qui correspond au premier instant (218).

2. Procédé selon la revendication 1,
   comprenant en outre les opérations consistant à :

   - afficher les données dérivées en utilisant au moins la mesure vectorielle et la mesure scalaire combinées, ou
   - faire migrer le jeu de mesures scalaires pour former une image sismique et afficher l'image sismique sur un support tangible.

3. Procédé selon la revendication 1,
   dans lequel
   on enregistre les données comprenant la mesure vectorielle et la mesure scalaire combinées sur un support de mémoire vendu pour le traitement de données suivant.

4. Procédé selon la revendication 1,
   dans lequel

   - la mesure vectorielle est corrigée en correspondance avec le même instant que l'angle d'incidence déterminé, et/ou
   - au moins une mesure vectorielle du jeu de mesures vectorielles d'où est dérivé le vecteur d'incidence correspond au même instant que l'angle d'incidence déterminé.

5. Procédé selon la revendication 1,
   dans lequel
   chaque mesure vectorielle du jeu de mesures vectorielles comprend une première composante représentant une direction z, une seconde composante représentant une direction x et une troisième composante représentant une direction y.

6. Procédé selon la revendication 1,
   comprenant en outre les opérations consistant à :

   - déterminer l'angle d'incidence du champ d'ondes sismiques pour chacun des ensembles d'instants en calculant le vecteur d'incidence à chaque instant respectif,
- corriger les composantes respectives de l'ensemble de mesures vectorielles du jeu de mesures vectorielles avec un angle d'incidence déterminé à chaque instant respectif, et
- combiner les composantes corrigées des mesures vectorielles avec des mesures scalaires respectives à chaque instant respectif pour enlever les ondes fantômes du champ d'ondes sismiques.

7. Procédé selon la revendication 1,
dans lequel

la composante corrigée, combinée de la mesure vectorielle et de la mesure scalaire représente une partie montante sans ondes fantômes du champ d'ondes sismiques, et
la partie montante sans ondes fantômes du champ d'ondes sismiques se calcule par la formule suivante :

$$U(t) = \frac{1}{2}\left( P(t) + \frac{\rho c}{\cos \theta(t)} V_Z(t) \right)$$

dans laquelle U(t) représente la partie montante sans ondes fantômes du champ d'ondes sismiques P(t) représentant la mesure scalaire en fonction du temps, $V_Z(t)$ représente la composante de la mesure vectorielle en fonction du temps, θ(t) représente l'angle d'incidence par rapport à la verticale en fonction du temps, ρc représente l'impédance acoustique et U, P et $V_Z$ se rapportent tous à la même position spatiale.

8. Procédé selon la revendication 1,
dans lequel

la composante corrigée combinée de la mesure vectorielle et de la mesure scalaire représente une partie descendante du champ d'ondes sismiques et cette partie descendante du champ d'ondes sismiques se calcule par la formule suivante :

$$D(t) = \frac{1}{2}\left( P(t) - \frac{\rho c}{\cos \theta(t)} V_Z(t) \right)$$

dans laquelle D(t) représente la partie descendante du champ d'ondes sismiques P(t) représente la mesure scalaire en fonction du temps, $V_Z(t)$ représente la composante de la mesure vectorielle en fonction du temps, θ(t) représente l'angle d'incidence par rapport à la verticale en fonction du temps et ρc représente l'impédance acoustique et D, P et Vz concernent tous la même position spatiale.

9. Procédé selon la revendication 1,
dans lequel
la mesure vectorielle comprend une mesure de vitesse de particules et la mesure scalaire comprend une mesure de pression.

10. Procédé selon la revendication 1,
dans lequel
la composante vectorielle est une composante verticale et l'angle d'incidence est défini par rapport à la composante vectorielle.

11. Procédé selon la revendication 1,
dans lequel
la composante de la mesure vectorielle comprend une combinaison de composantes horizontales.

12. Procédé selon la revendication 1,
dans lequel
l'angle d'incidence du champ d'ondes sismiques se détermine dans un domaine temporel.

**13.** Procédé selon la revendication 1,
dans lequel

le récepteur sismique est un premier récepteur sismique, et en outre
le vecteur d'incidence se calcule et la mesure vectorielle se corrige sans référence à un jeu de mesures vectorielles à partir du second récepteur sismique.

**14.** Système de traitement de données sismiques comprenant :

- un récepteur sismique (103, 403, 503) configuré pour saisir un jeu de mesures vectorielles et un jeu de mesures scalaires d'un champ d'ondes sismiques à chacun des instants d'un ensemble d'instants, chaque mesure vectorielle du jeu comprenant un ensemble de composantes et chaque mesure vectorielle et chaque mesure scalaire des jeux respectifs correspondent à l'un des instants de l'ensemble des instants,
- une unité de stockage (106) configurée pour enregistrer le jeu de mesures vectorielles et le jeu de mesures scalaires du récepteur sismique, système **caractérisé en ce qu'**il comprend un processeur (108) configuré pour :
- déterminer l'angle d'incidence du champ d'ondes sismiques dans le récepteur sismique à un premier instant en calculant un vecteur d'incidence du champ d'ondes sismiques dans le récepteur sismique au premier instant, le vecteur d'incidence étant dérivé d'une mesure de covariance entre différentes composantes d'au moins une mesure vectorielle du jeu de mesures vectorielles (212, 214) ou entre un ensemble de mesures vectorielles du jeu de mesures vectorielles,
- corriger une composante de mesure vectorielle du jeu de mesures vectorielles avec un angle d'incidence déterminé à un premier instant (216), et
- combiner la composante corrigée de la mesure vectorielle avec une mesure scalaire dans le jeu de mesures scalaires qui correspond au premier instant (218).

**15.** Support d'enregistrement tangible pour enregistrer un ensemble d'instructions,

les instructions consistant à :

- obtenir un jeu de mesures vectorielles d'un champ d'ondes sismiques dans un récepteur sismique et un jeu de mesures scalaires du champ d'ondes sismiques dans le récepteur sismique, chaque mesure vectorielle du jeu comprenant un ensemble de composantes et chaque mesure vectorielle et scalaire des jeux respectifs correspondant à un instant respectif (210),

support **caractérisé en ce qu'**il consiste en outre à :

- déterminer un angle d'incidence du champ d'ondes sismiques dans le récepteur sismique à un premier instant en calculant un vecteur d'incidence du champ d'ondes sismiques dans le récepteur sismique au premier instant, le vecteur d'incidence étant dérivé d'une mesure de covariance entre les différentes composantes d'au moins une mesure vectorielle du jeu de mesures vectorielles (212, 214) ou entre un ensemble de mesures vectorielles du jeu de mesures vectorielles,
- corriger une composante d'une mesure vectorielle avec l'angle d'incidence déterminé au premier instant (216), et
- combiner la composante corrigée de la mesure vectorielle avec une mesure scalaire dans le jeu de mesures scalaires qui correspond au premier instant (218).

100

SEISMIC SOURCE DATA

SEISMIC SOURCE(S) — 102

SEISMIC RECEIVER(S) — 103

SEISMIC TRACES

DATA STORAGE — 106

DATA PROCESSING APPARATUS — 108

PROCESSED SEISMIC DATA

FIG.1

```
200
```

OBTAIN A SET OF VECTORIAL MEASUREMENTS OF A SEISMIC WAVE AND A SET OF SCALAR MEASUREMENTS OF THE SEISMIC WAVE AT A SEISMIC RECEIVER — 210

CALCULATE AN INCIDENCE VECTOR OF THE SEISMIC WAVE AT THE SEISMIC RECEIVER AT AN INSTANCE OF TIME, THE INCIDENCE VECTOR DERIVED FROM A MEASURE OF CORRELATION OF AT LEAST ONE VECTORIAL MEASUREMENT OF THE SET OF VECTORIAL MEASUREMENTS — 212

DETERMINE AN ANGLE OF INCIDENCE OF THE SEISMIC WAVE AT THE SEISMIC RECEIVER AT THE INSTANCE OF TIME FROM THE CALCULATED INCIDENCE VECTOR — 214

CORRECT ONE COMPONENT OF THE VECTORIAL MEASUREMENT AT THE INSTANCE OF TIME WITH THE DETERMINED ANGLE OF INCIDENCE — 216

COMBINE THE CORRECTED ONE COMPONENT OF THE VECTORIAL MEASUREMENT WITH A CORRESPONDING ONE OF THE SET OF SCALAR MEASUREMENTS AT THE INSTANCE OF TIME — 218

FIG.2

*300*

```
┌─────────────────────────────────────┐
│ GENERATE A COVARIANCE MATRIX, AS A   │  310
│ FUNCTION OF TIME, OF A SET OF MEASURED│
│ VECTORIAL DATA FROM A SEISMIC RECEIVER│
└─────────────────────────────────────┘
                  │
                  ▼
┌─────────────────────────────────────┐
│ CALCULATE AN INCIDENCE VECTOR OF A   │  312
│ SEISMIC WAVE AT THE SEISMIC RECEIVER, AS A│
│ FUNCTION OF TIME, FROM THE GENERATED │
│ COVARIANCE MATRIX                    │
└─────────────────────────────────────┘
                  │
                  ▼
┌─────────────────────────────────────┐
│ GENERATE A CORRECTED SET OF VECTORIAL│  314
│ DATA AS A FUNCTION OF THE SET OF MEASURED│
│ VECTORIAL DATA AND THE CALCULATED    │
│ INCIDENCE VECTOR                     │
└─────────────────────────────────────┘
                  │
                  ▼
┌─────────────────────────────────────┐
│ COMBINE THE CORRECTED SET OF VECTORIAL│  316
│ DATA WITH A SET OF MEASURED SCALAR DATA│
│ FROM THE SEISMIC RECEIVER            │
└─────────────────────────────────────┘
```

FIG.3

FIG.4A

FIG.4B

FIG.5

FIG.6

**EP 2 810 099 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61594535
- US 2006050611 A
- WO 13222563 A
- WO 13011358 A